(19) Europäisches Patentamt
European Patent Office
Office européen des brevets

(11) Numéro de publication : 0 287 421 B1

# (12) FASCICULE DE BREVET EUROPEEN

(45) Date de publication du fascicule du brevet : **05.06.91 Bulletin 91/23**

(51) Int. Cl.$^5$ : **C01B 15/023**

(21) Numéro de dépôt : **88400755.0**

(22) Date de dépôt : **29.03.88**

## (54) Procédé de production cyclique de peroxyde d'hydrogène.

(30) Priorité : **16.04.87 FR 8705429**

(43) Date de publication de la demande : **19.10.88 Bulletin 88/42**

(45) Mention de la délivrance du brevet : **05.06.91 Bulletin 91/23**

(84) Etats contractants désignés : **AT BE CH DE ES FR GB GR IT LI LU NL SE**

(56) Documents cités : **EP-A- 0 044 480**

(73) Titulaire : **ATOCHEM**
**4 & 8, Cours Michelet La Défense 10**
**F-92800 Puteaux (FR)**
Titulaire : **OXYSYNTHESE**
**6, rue Cognacq-Jay**
**F-75321 Paris Cedex 07 (FR)**

(72) Inventeur : **Pralus, Christian**
**3, rue des Gasses**
**F-69450 Saint-Cyr-au-Mont-d'Or (FR)**

(74) Mandataire : **Le Moenner, Gabriel et al**
**L'AIR LIQUIDE, Société Anonyme pour l'étude et l'exploitation des procédés Georges Claude**
**75, Quai d'Orsay**
**F-75321 Paris Cédex 07 (FR)**

EP 0 287 421 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un perfectionnement au procédé de production cyclique de peroxyde d'hydrogène par oxydation et réduction alternées de certains composés organiques et plus particulièrement des anthraquinones portant un ou plusieurs substituants sur l'un au moins des noyaux latéraux.

De tels composés après dissolution dans un milieu solvant organique constituent une solution de travail.

La solution de travail contenant l'anthraquinone est réduite à l'état d'anthra-hydroquinone, par hydrogénation catalytique ; et l'anthra-hydroquinone est ensuite oxydée à l'état d'hydroperoxyde d'anthraquinone. Celui-ci toujours dissous dans le milieu solvant, est soumis à un traitement par l'eau. Il est ainsi décomposé en peroxyde d'hydrogène qui se dissout dans l'eau, et en anthraquinone qui reste en solution dans le milieu solvant organique et est renvoyée au stade de la réduction.

Le solvant organique doit pouvoir dissoudre aussi bien la forme oxydée (anthraquinone) que la forme réduite (anthrahydroquinone). Les solvants utilisables et pouvant dissoudre de façon satisfaisante les deux formes étant rares, on utilise le plus souvent un mélange de constituants.

Les solvants mis en oeuvre dans le procédé à l'anthraquinone sont de manière usuelle des systèmes à deux constituants dans lesquels un solvant de type hydrocarbure intervient dans la dissolution de la quinone et un solvant de type polaire intervient dans celle de l'hydroquinone.

Les systèmes solvants utilisés doivent être de bons solvants des formes quinone et hydroquinone, tout en étant très peu sensibles à la dégradation pendant les phases d'hydrogénation et d'oxydation. En outre, ils doivent avoir une faible solubilité dans l'eau et les solutions aqueuses de peroxyde d'hydrogène ; et leur densité doit être telle que l'extraction du peroxyde d'hydrogène soit réalisable par simple séparation des phases aqueuse et organique. De plus, ces systèmes solvants doivent également avoir une faible volatilité associée à un coefficient de distribution élevé du peroxyde d'hydrogène.

La DAS allemande 1.945.750 a proposé le tert-butylbenzène comme solvant de la quinone, résistant à l'oxydation sans dégradation notable à 140°C pendant plusieurs heures.

Le brevet français 2.244.709 a présenté des amides d'acides carboxyliques de formule

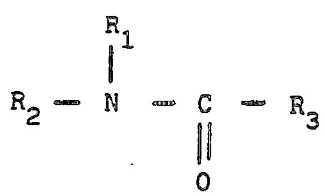

dans laquelle $R_1$, $R_2$, et $R_3$ sont des groupes alcoyles ayant de 1 à 8 atomes de carbone, comme solvants des anthraquinones utilisées dans la production du peroxyde d'hydrogène, en particulier sous forme de mélanges avec d'autres solvants ; mais il a été constaté que ces solvants polaires sont instables car insuffisamment résistants à l'oxydation.

En conséquence, il est apparu nécessaire de rechercher des solvants présentant toutes les qualités précédentes associées à une très haute résistance à l'oxydation et permettant la production de peroxyde d'hydrogène avec des rendements élevés.

Il a maintenant été trouvé qu'un amide d'acide carboxylique, désigné dans tout ce qui suit par amide, qui comprend un groupe aryle fixé sur l'azote ou sur le carbone du carbonyle présente une excellente tenue à l'oxydation, nettement supérieure à celle des amides cités plus haut.

Il a de plus été trouvé qu'un amide comprenant un groupe aryle fixé sur l'azote a une stabilité exceptionnelle à l'oxydation lorsqu'un deuxième groupe aryle est fixé sur l'azote ou sur le carbone du carbonyle. La dégradation peut être alors pratiquement nulle après plusieurs centaines d'heures d'oxydation.

Selon l'invention, dans le cadre d'un procédé de production cyclique de peroxyde d'hydrogène par réduction et oxydation alternées d'une quinone, puis extraction du peroxyde d'hydrogène formé, il est proposé un milieu solvant renfermant un amide d'acide carboxylique comprenant au moins un groupe aryle pour satisfaire une des conditions suivantes :

a) un groupe aryle est fixé sur l'azote ou sur le carbone du carbonyle,

b) un groupe aryle est fixé sur l'azote, et un autre, identique ou différent est fixé sur l'azote ou sur le carbone du carbonyle.

Avantageusement, le milieu solvant comprend un amide à deux groupes aryles tel que défini en b) surtout si un groupe alcoyle linéaire ayant de 1 à 8 atomes de carbone est fixé selon le cas sur l'azote ou sur le carbone du carbonyle.

Lorsque les groupes aryles sont des groupes phényle ou phényles substitués par au moins un groupe alcoyle ayant de 1 à 3 atomes de carbone, les amides correspondants comme par exemple le N,N diphénylacétamide, le N-phényl N-éthyl benzamide ou le N-phényl N-éthyltoluamide constituent de très bons solvants polaires dans le cadre de l'invention et leur emploi est préféré.

Ces amides particuliers, selon l'invention, se caractérisent par une très grande stabilité à l'oxydation. A 150°C, ces produits ne se dégradent pas, alors que pour un des solvants polaires préférentiels de la forme réduite des composés oxydoréductibles, l'un des plus favorables, couramment mis en oeuvre dans la production de peroxyde d'hydrogène, l'acétate de méthylcyclohexyle, 22% disparaissent en 150 heures.

Les amides à deux groupes aryles selon l'invention, peuvent être aisément associés à un solvant de type hydrocarbure intervenant dans la dissolution de la quinone, pour la constitution d'une solution de travail. Le milieu solvant dans lequel l'anthraquinone est dissoute, peut être constitué avantageusement par 5 à 50% en poids d'un amide substitué selon l'invention et en particulier de 10 à 30% en poids, le complément à 100 étant constitué par un solvant du type hydrocarbure couramment utilisé dans la production de peroxyde d'hydrogène.

Les amides selon l'invention constituent d'excellents solvants polaires entrant dans la constitution de solution de travail contenant des quinones, choisies parmi les anthraquinones et tétrahydroanthraquinones, notamment les éthylanthraquinone (E AQ) et tétrahydroéthylanthraquinone ($H_4$ EAQ), les tert-butylanthraquinone et tétrahydroterbutylanthraquinone, les amylanthraquinone et tétrahydroamylanthraquinone.

De plus, il a été constaté que pour des solutions de travail à coefficient de partage équivalent, l'utilisation d'amide selon l'invention améliore la productivité en peroxyde d'hydrogène.

Il est donné ci-après des exemples non limitatifs illustrant l'invention et mettant en évidence ces avantages.

## Example 1

Dans cet exemple, on a conduit une étude comparative de la tenue à l'oxydation entre le N,N-dihexylacétamide et le N-hexyl N-phényl acétamide.

On place 20g d'amide dans un récipient en verre de 100 cm$^3$, on chauffe sous agitation magnétique à la température désirée de 150°C dans la phase liquide. L'ensemble est surmonté d'un réfrigérant. On fait barboter l'air dans le milieu à un débit de 5 litres/heures.

La tenue du N,N-dihexylacétamide est évaluée en oxydation comparativement au N-hexyl N-phénylacétamide après 95 heures.

Pour le N,N-dihexylacétamide le taux de décomposition est de 34%, alors que pour le N-hexyl-N-phénylacétamide le taux de décomposition n'atteint que 9%.

La présence d'un groupe aryle diminue la dégradation à l'oxydation de manière très substantielle, pratiquement quatre fois moins.

## Exemple 2

Dans cet exemple, on a conduit un essai comparatif dans les mêmes conditions d'oxydation que précédemment entre le N,N diéthylacétamide et le N-éthyl N-phénylacétamide.

Après un traitement d'oxydation d'une durée de 140 heures, le taux de décomposition du N,N-diéthylacétamide atteint 53,5%, alors que celui du N-phényl-N-éthylacétamide n'est que de 20,5%. La présence du groupe aromatique protège l'amide de la dégradation, la résistance à l'oxydation est accrue de près de trois fois.

## Exemple 3

Dans cet exemple, on a conduit une étude parallèle de la tenue à l'oxydation du N,N-diéthyltoluamide et du N-phényl N-éthyl toluamide dans les mêmes conditions d'oxydation que précédemment.

Après un traitement d'oxydation d'une durée de 140 heures, le taux de décomposition du N,N-diéthyltoluamide est de 18%, alors que le N-phényl N-éthyltoluamide n'a subi aucune dégradation, le taux de décomposition étant nul.

On constate que la présence dans une structure amide de deux groupes aryles, fixés l'une sur le carbone du carbonyle, l'autre sur l'azote, confère aux composés correspondants une stabilité exceptionnelle à l'oxydation.

## Exemple 4

Dans cet exemple, on a conduit une étude comparative de la tenue à l'oxydation entre le N-phényl N-éthyl acétamide et le N,N-diphénylacétamide, dans les mêmes conditions d'oxydation que précédemment.

Après un traitement d'oxydation d'une durée de 190 heures, le taux de décomposition du N-phényl N-éthyl acétamide est de 20,5% et pour le N,N diphényl acétamide ce taux est nul.

On constate que la présence de deux groupes aromatiques sur l'azote d'une structure amide confère à ces composés une résistance exceptionnelle à l'oxydation.

Exemple 5

Dans cet exemple on a étudié la productivité maximale de solutions de travail à coefficients de partage équivalents contenant de la 2-éthyl anthraquinone (EAQ).

On prépare trois milieux solvants contenant un solvant polaire tel que le N-phényl N-éthylbenzamide, le N-phényl N-éthyl toluamide et l'acétate de méthyl cyclohexyle utilisé sous forme du mélange vendu sous la marque commerciale "Sextate"®, en mélange avec une coupe pétrolière de point d'ébullition entre 152-160°C, constituée par des hydrocarbures aromatiques en $C_9$, vendue sous la marque commerciale "Antarsol"®.

Les amides disubstitués par un groupe aromatique et "l'Antarsol"® sont mis en oeuvre dans un rapport massique de 15/85. Le "Sextate"® et "l'Antarsol"® sont utilisés dans un rapport volumique de 30/70.

Les productivités maximales en peroxyde d'hydrogène de solution de travail à base de ces trois mélanges de solvants ont été déterminées, en conduisant une réaction d'hydrogénation d'une solution de travail contenant 50 g/l d'éthylanthraquinone en présence de 500 mg de palladium sur support amorphe silice-alumine à une température de 50°C, dans un réacteur de 175 cm³ agité par balancelle.

Les résultats obtenus sont consignés dans le tableau I ci-après :

TABLEAU I

| MELANGE DE SOLVANTS | COEFFICIENT DE PARTAGE | PRODUCTIVITE MAX THEORIQUE EN $H_2O_2$ g/l | PRODUCTIVITE MAX. EXPRIMEE EN $H_2O_2$ g/l |
|---|---|---|---|
| 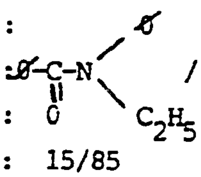 /"Antarsol"® 15/85 | 142 | 7,2 | 7,1 précipitation |
| 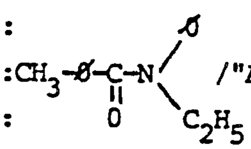 /"Antarsol"® 15/85 | 150 | 7,2 | 7,2 précipitation |
| "Sextate"®/"Antarsol"® 30/70 | 148,5 | 7,2 | 5,8 précipitation |

Ø = groupe phényle $C_6H_5$

De la lecture de ce tableau on constate que pour des milieux solvants à coefficients de partage équivalents les productivités sont différentes.

La productivité est très nettement plus élevée avec des mélanges "Antarsol"®/amides substitués par des groupes aryles.

De plus, la précipitation ne débute dans ce cas que lorsque la productivité maximale théorique a déjà été

pratiquement atteinte.

Exemple 6

Dans cet exemple on a étudié la productivité maximale de solutions de travail à coefficients de partage équivalents contenant de la 2-tétrahydroéthylanthraquinone ($H_4EAQ$).

Dans les mêmes conditions d'hydrogénation que précédemment on a testé trois mélanges de solvants constitués d'"Antarsol"® et de différents solvants avec comme support oxydo-réductible : $H_4$ EAQ.

Les résultats obtenus sont consignés dans le tableau II ci-après.

TABLEAU II

| MELANGE DE SOLVANTS | COEFFICIENT DE PARTAGE | CONCENTRATION DE $H_4$ EAQ | PRODUCTIVTIE MAX.OBTENUE EN $H_2O_2$ (g/l) |
|---|---|---|---|
| 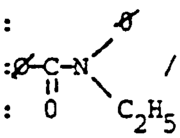 /"Antarsol"® 25/75 | 62,5 | 100g/l équivalent $H_2O_2$ théorique 14,2 g | 14,2 sans précipitation |
| (1) 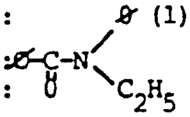 /"Antarsol"® | 62,5 | Saturation 115-120 g/l équivalent $H_2O_2$ 16,6 g | 16-17 |
| 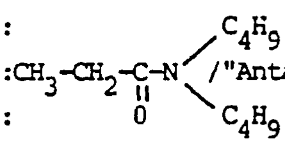 /"Antarsol"® 13,5/86,5 | 60,1 | 100 g/l équivalent $H_2O_2$ théorique 14,2 g | 14 précipitation |
| "Sextate"®/"Antarsol"® 50/50 | 64,3 | Saturation 93 g/l équivalent $H_2O_2$ théorique 13,4 g | 13-13,5 sans précipitation |

(1) Ø = groupe phényle $C_6H_5$

Dans les deux premiers essais on a choisi comme milieu solvant un mélange constitué d'un solvant polaire le N-phényl N-éthyl benzamide et d'"Antarsol"®, les deux constituants étant dans un rapport massique de 25/75.

La concentration de la solution de travail en tétrahydroéthylanthraquinone est de 100 g/l, soit un équivalent en peroxyde d'hydrogène théorique de 14,2 g/l, dans le premier essai, on obtient une productivité maximale en $H_2O_2$ de 14,2 g/l sans précipitation.

Dans le second essai en présence du même milieu solvant, mais avec une concentration en $H_4$ EAQ à saturation soit 115-120 g/l, correspondant un équivalent $H_2O_2$ théorique de 16,6 g, on obtient une productivité maximale en $H_2O_2$ de 16 à 17 g/l. Jusqu'à une productivité d'au moins 16 g/l on ne constate aucune précipitation, ensuite en atteignant la saturation à l'hydrogénation il apparait une légère précipitation.

Le troisième essai a été mis en oeuvre dans un milieu solvant constitué par le N,N-dibutylpropionamide, comme solvant polaire en mélange avec de l'"Antarsol"®, dans un rapport volumique 13,5/86,5, la solution de travail contient 100 g/l de $H_4$ EAQ, soit un équivalent $H_2O_2$ théorique de 14,2 g. Dans ces conditions on obtient une productivité maximale en $H_2O_2$ de 14 g/l avec précipitation.

Le quatrième essai comparatif a été mis en oeuvre dans un milieu solvant usuel dans la fabrication du peroxyde d'hydrogène avec comme solvant polaire, le produit vendu sous la marque commerciale "Sextate"® en mélange avec le produit commercialisé sous la marque "Antarsol"® dans un rapport volumique 50/50. Avec une solution de travail à saturation, contenant 93 g/l, soit un équivalent $H_2O_2$ théorique de 13,4 g/l, on obtient une productivité maximale en $H_2O_2$ de 13-13,5 g/l sans précipitation.

La lecture du tableau II montre que pour des milieux solvants à coefficients de partage équivalents, la meilleure productivité est obtenue en mettant en oeuvre le mélange de solvants N-phényl N-éthyl benzamide/"Antarson"® (25/75).

## Revendications

1. Procédé de production cyclique de peroxyde d'hydrogène par réduction et oxydation alternées d'un quinone en milieu solvant puis extraction du peroxyde d'hydrogène formé, caractérisé en ce que le milieu solvant renferme un amide d'acide carboxylique comprenant au moins un groupe aryle pour satisfaire une des conditions suivantes :
a) un groupe aryle est fixé sur l'azote ou le carbone du carbonyle
b) un groupe aryle est fixé sur l'azote et un autre, identique ou différent, est fixé sur l'azote ou sur le carbone du carbonyle.

2. Procédé selon la revendication 1, caractérisé en ce que l'amide qui comprend deux groupes aryles présente aussi un groupe alcoyle linéaire ayant de 1 à 8 atomes de carbone fixé sur l'azote ou sur le carbone du carbonyle.

3. Procédé selon la revendication 1 ou 2, caractérisé en ce que les groupes aryles sont des groupes phényles ou phényle substitué par au moins un radical alcoyle contenant de 1 à 3 atomes de carbone.

4. Procédé selon une quelconque des revendications 1 à 3, caractérisé en ce que l'amide est choisi parmi le N,N-diphénylacétamide, le N-phényl N-éthylbenzamide, le N-phényl N-éthyltoluamide.

5. Procédé selon une quelconque des revendications 1 à 4, caractérisé en ce que la quinone est choisie parmi les anthraquinones et tétrahydroanthraquinones, tels que les éthylanthraquinone et tétrahydroéthylanthraquinone, les tert-butylanthraquinone et tétrahydroterbutylanthraquinone, les amylanthraquinone et tétrahydroamylanthraquinone.

6. Procédé selon une quelconque des revendications 1 à 5, caractérisé en ce que le milieu solvant renferme 5 à 50% en poids d'amide et 50 à 95% en poids d'un solvant du type hydrocarbure couramment utilisé dans la production de peroxyde d'hydrogène.

7. Procédé selon la revendication 6, caractérisé en ce que le milieu solvant renferme 10 à 30% en poids d'amide et 90 à 70% en poids d'un solvant du type hydrocarbure couramment utilisé dans la production de peroxyde d'hydrogène.

## Ansprüche

1. Verfahren zur periodischen Produktion von Wasserstoffperoxid durch abwechselnde Reduktion und Oxidation eines Chinons in Lösungsmittelmedium und anschließende Extraktion des entstandenen Wasserstoffperoxids, dadurch gekennzeichnet, daß das Lösungsmittelmedium ein Carbonsäureamid enthält, das mindestens eine Arylgruppe umfaßt, um einer der folgenden Bedingungen zu genügen :
a) eine Arylgruppe ist an den Stickstoff oder den Kohlenstoff des Carbonyls gebunden
b) eine Arylgruppe ist an den Stickstoff gebunden, und eine andere, übereinstimmende oder abweichende Arylgruppe ist an den Stickstoff oder an den Kohlenstoff des Carbonyls gebunden.

2. Verfahren nach Anspruch 1, dadurch gekennzeichnet, daß das zwei Arylgruppen umfassende Amid außerdem eine an den Stickstoff oder den Kohlenstoff des Carbonyls gebundene lineare Alkylgruppe mit 1 bis 8 Kohlenstoffatomen aufweist.

3. Verfahren nach Anspruch 1 oder 2, dadurch gekennzeichnet, daß die Arylgruppen Phenylgruppen oder mit mindestens einem, 1 bis 3 Kohlenstoffatome aufweisenden Alkylradikal substituiertes Phenyl sind.

4. Verfahren nach einem der Ansprüche 1 bis 3, dadurch gekennzeichnet, daß als Amid N,N-Diphenylacetamid oder N-Phenyl-N-ethylbenzamid oder N-Phenyl-N-ethyltoluamid gewählt wird.

5. Verfahren nach einem der Ansprüche 1 bis 4, dadurch gekennzeichnet, daß als Chinon Anthrachinone und Tetrahydroanthrachinone gewählt werden, z.B. Ethylanthrachinon und Tetrahydroethylanthrachinon, Tertbutylanthrachinon und Tetrahydroterbutylanthrachinon, Amylanthrachinon und Tetrahydroamylanthrachinon.

6. Verfahren nach einem der Ansprüche 1 bis 5, dadurch gekennzeichnet, daß das Lösungsmittelmediun 5 bis 50 Gew.% Amid und 50 bis 95 Gew.% eines Lösungsmittels vom Typ Kohlenwasserstoffe enthält, wie es für die Produktion von Wasserstoffperoxid gebräuchlich ist.

7. Verfahren nach Anspruch 6, dadurch gekennzeichnet, daß das Lösungsmittelmedium 10 bis 30 Gew.% Amid und 90 bis 70 Gew.% eines Lösungsmittels vom Typ Kohlenwasserstoffe enthält, wie es für die Produktion von Wasserstoffperoxid gebräuchlich ist.

## Claims

1. Cyclic process for production of hydrogen peroxide by alternately reducing and oxidizing a quinone in a solvent medium, then extracting the hydrogen peroxide formed, **characterised in that** the solvent medium contains a carboxylic acid amide having at least one aryl group, to satisfy one of the following conditions :

a) an aryl group is attached to the nitrogen or the carbon of the carbonyl ;

b) an aryl group is attached to the nitrogen, and another aryl group, which is the same or different, is attached to the nitrogen or to the carbon of the carbonyl.

2. Process according to claim 1,
**characterised in that** the amide containing two aryl groups also includes a linear alkyl group having from 1 to 8 carbon atoms attached to the nitrogen or to the carbon of the carbonyl.

3. Process according to claim 1 or 2,
**characterised in that** the aryl groups are phenyl groups or a phenyl group substituted by at least one alkyl radical containing from 1 to 3 carbon atoms.

4. Process according to any one of claims 1 to 3,
**characterised in that** the amide is selected from N,N-diphenylacetamide, N-phenyl N-ethyl benzamide, N-phenyl N-ethyltoluamide.

5. Process according to any one of claims 1 to 4,
**characterised in that** the quinone is selected from anthraquinones and tetrahydroanthraquinones, such as ethylanthraquinone, tetrahydroethylanthraquinone, tert-butylanthraquinone and tetrahydroterbutylanthraquinone, amylanthraquinone and tetrahydroamylanthraquinone.

6. Process according to any one of claims 1 to 5,
**characterised in that** the solvent medium contains from 5 to 50% by weight of aide and from 50 to 95% by weight of a solvent of the hydrocarbon type which is conventionally used in the production of hydrogen peroxide.

7. Process according to claim 6,
**characterised in that** the solvent medium contains 10 to 30% by weight of amide and from 90 to 70% by weight of a conventional solvent of the hydrocarbon type conventionally used in the production of hydrogen peroxide.